(19) Europäisches Patentamt
European Patent Office
Office européen des brevets

(11) **EP 4 280 198 B1**

(12) **EUROPEAN PATENT SPECIFICATION**

(45) Date of publication and mention
of the grant of the patent:
**11.03.2026 Bulletin 2026/11**

(21) Application number: **21918662.4**

(22) Date of filing: **18.01.2021**

(51) International Patent Classification (IPC):
***G09F 3/02*** *(2006.01)*     ***G06V 10/54*** *(2022.01)*

(52) Cooperative Patent Classification (CPC):
**G09F 3/0297; G06V 10/54; G09F 3/0294**

(86) International application number:
**PCT/CN2021/072381**

(87) International publication number:
**WO 2022/151460 (21.07.2022 Gazette 2022/29)**

(54) **LASER LABEL IDENTIFICATION DEVICE AND METHOD**

LASERETIKETT-IDENTIFIKATIONSEINRICHTUNG UND VERFAHREN

DISPOSITIF ET PROCÉDÉ D'IDENTIFICATION D'ÉTIQUETTE LASER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.11.2023 Bulletin 2023/47**

(73) Proprietor: **Robert Bosch GmbH
70442 Stuttgart (DE)**

(72) Inventors:
• **YANG, Wanlin
Shanghai 200335 (CN)**
• **GAO, Yu
Shanghai 200335 (CN)**
• **XIE, Hui
Shanghai 200335 (CN)**

(56) References cited:
**CN-A- 102 646 363**    **CN-A- 103 177 268**
**CN-A- 107 907 124**    **CN-A- 109 858 582**
**CN-A- 110 428 028**    **CN-A- 110 544 424**
**CN-A- 110 544 424**    **CN-U- 203 870 645**
**US-B1- 6 723 259**

## Description

## Technical Field

The present invention relates to a laser label identification device and identification method, and a respective machine storage medium.

## Background

In recent years, the formation of laser labels through laser marking has been widely applied to automobiles, consumer products, consumer electronics, and the like. Lasers are beams generated by the irradiated particles, which are referred to as the "most rapid knife", the "most accurate ruler", and the "most bright light". Thus, laser marking is characterized by fast marking speed, no wearing, and no environmental pollution compared to traditional marking processes such as chemical corrosion, ink jetting, mechanical engraving, etc.

The laser labels on the product are read by the reader and are identified. Existing readers primarily focus on improving their ability to identify images of distorted labels, but there is no preferred solution to confirm the authenticity and security of the labels and the products that use them. This raises many questions, such as whether a consumer cannot accurately know whether a product he/she purchases is a genuine product or a counterfeit through laser label verification; and whether a component is a genuine product or a counterfeit through laser label verification on a production line, resulting in many components having to be reworked or scrapped.

CN 110 544 424 A provides a random texture anti-counterfeiting mark structure with a detection mark.

## Summary

The present invention is set out by the appended claims. Advantageous embodiments are presented in dependent claims.

According to the present invention, a laser label identification device is provided, as defined by independent claim 1. The laser label identification device comprises: a receiving module configured to receive an object image comprising a laser label image and a label area image of a laser label area on an object surface; a processing module configured to process the object image to obtain a texture feature of the laser label area that is laser burned to form a laser label, the texture feature compring a natural finger print feature of the lase label area and being associated with a material of the laser label area, a laser marking device employed, and a laser marking process; and a recognition module configured to match the object image to a stored standard image for identifying the authenticity of the object image. The standard image comprises a standard laser label image as a matching standard and a standard label area image containing a standard texture feature of the label area, wherein the matching comprises matching the label image and texture feature of the object with the standard label image and standard texture feature respectively.

According to the present invention, the factors that affect the texture feature comprise at least one of:

- process parameters during the laser marking process;

- the type of laser marking device used and its performance parameters; and

- a combination of materials for a laser marking device employed and the laser label area.

According to an embodiment of the present disclosure, the laser label identification device further comprises an output module configured to output an identification result so as to determine the authenticity of the product corresponding to the object image.

According to an embodiment of the present disclosure, the authenticity of the product comprises:

(1) The product corresponding to the object image is a genuine product or a counterfeit;
(2) Whether the products corresponding to the object images meet the customized requirements, optionally, the customized requirements comprise one or more of a pre-specified place of manufacture, production institution, and distribution channel;
(3) Whether the products corresponding to the object image belong to the same lot of products;
(4) The products corresponding to the object image belong to one lot of the multiple lots of products or does not belong to any of the multiple lots of products.

According to an embodiment of the present disclosure, the authenticity of the object image is identified, comprising: matching the object image to a standard image representing the same lot of products; in the event of successful matching, determining that the products corresponding to the object image belong to this lot; and in the event of failed matching, determining that the products corresponding to the object image do not belong to this lot.

According to an embodiment of the present disclosure, the authenticity of the object image is identified, comprising: matching the object image to a standard image representing each lot of products for a plurality of lots; determining that a product corresponding to the object image belongs to this lot if the object image successfully matches a standard image representing a lot of products; and determining that a product corresponding to the object image does not belong to any lot of the plurality of lots of product if the object image fails to match a standard image representing any lot of product.

According to an embodiment of the present disclosure, the authenticity of the object image is identified, comprising: matching the object image with a standard image of a type of genuine product; determining that the product corresponding to the object image is genuine in case of successful matching; and determining that the product corresponding to the object image is a counterfeit in case of failed matching.

According to an embodiment of the present disclosure, the matching comprises: generating a multi-dimensional object feature vector based on various parameters and weights of the texture features of the object image; generating a multi-dimensional standard feature vector based on the parameters and weights of the standard texture features of the standard image; calculating a distance between the object feature vector and the standard feature vector, optionally an Euclidean distance; and determining the authenticity of the object image based on whether the distance meets a distance threshold.

According to an embodiment of the present disclosure, the identification module implements the identification by means of an image recognition model, the object image being used as a model input, and a model output representative of the authenticity of the object image after the model processing is obtained.

According to an embodiment of the present disclosure, the image processing model is a machine learning model.

According to an embodiment of the present disclosure, the machine learning model performs relearning based on information obtained by the identification device during use.

According to an embodiment of the present disclosure, the identification device is disposed in a reader for capturing the object image; or the identification device is disposed in a authentication device for authenticating the authenticity of a product corresponding to the object image.

In another aspect, the present disclosure provides a laser label identification method, optionally performed by an identification device according to the present invention, comprising: receiving an object image comprising a laser label image and a label area image of a laser label area on an object surface; processing the object image to obtain a texture feature of a laser label area on the object surface, the texture feature being associated with the material of the laser label area, the laser marking device employed, and the laser marking process; and matching the object image to a stored standard image to identify the authenticity of the object image, the standard image comprising the standard laser label image as the matching criterion and the standard label area image comprising the standard texture feature of the label area, wherein the matching comprises the matching between the label image and texture feature of the object with the standard label image and standard texture feature.

In another aspect, the present disclosure provides for a machine-readable storage medium having stored executable instructions that, when executed, cause one or more processors to perform the methods described above.

To further understand the features of the present disclosure and the technical contents, please refer to the following detailed description and appended drawings, which are provided for reference and illustration only and are not intended to limit the present disclosure.

**Brief Description of the Drawings**

Fig. 1 shows an exemplary operating environment according to some embodiments of the present disclosure.
Fig. 2 shows a reader having an identification device according to the embodiments of the present disclosure.
Fig. 3 shows a schematic block diagram of an identification device according to the embodiments of the present disclosure.
Fig. 4 shows an identification process according to the embodiments of the present disclosure.
Fig. 5 shows a flow chart of an identification method according to the embodiments of the present disclosure.

**Description of Embodiments**

An important aspect of the present disclosure lies in the authenticity identification and verification of the product itself. In particular, each product leaves a unique texture feature on the surface during manufacturing, which can be understood as a "natural fingerprint" of the product. Examples of the present invention provide an identification method of "natural fingerprints" by means of laser labels, i.e., in addition to reading the laser label itself, the texture features of the areas on which the product is laser-marked to form the laser label are is also read and the read information is matched to the stored standard information for authenticity identification and verification.

The label in the present disclosure refers to a laser label, i.e., an identification formed on the surface of a product by laser marking (e.g., laser coding, laser marking). The laser labels may be implemented in different colors and/or different styles. The laser label may be implemented to burn a one-dimensional code, a QR code, or a custom mark (e.g., a letter, a number, a symbol of a custom color), etc., by the laser.

In an example of the present disclosure, the laser label and its label area may be implemented as: The black block area of the QR code is burned on the light material; the blank block area of the QR code is burned on the dark material; the blank block area of the QR code is burned on the light material; or the black block area of the QR code is burned on the dark material.

In the present disclosure, "genuine" or "counterfeit" may include some of the situations described below.

(1) The product corresponding to the laser label is a genuine product or a counterfeit, and the counterfeit can be identified thereby. In this case, "genuine" corresponds to the product being a genuine product; "counterfeit" corresponds to the product being a counterfeit.

(2) Whether the product corresponding to the laser label meets the customization requirements. In this case, "genuine" corresponds to the product meeting the customization requirements; "counterfeit" corresponds to the product failing to meet the customization requirements.

The customization requirements may include one or more of a predetermined place of origin (e.g., in some cases, by identifying the place of origin of the product to identify the grade and specification of the product), a production institution (e.g., in some cases, by identifying the production institution of the product to identify the grade and specification of the product), a distribution channel (in other cases, by identifying the distribution channel of the product to identify whether the source of the product is compliant).

(3) Whether the product corresponding to the laser label belongs to the same lot of products. In this case, "genuine" corresponds to the product belonging to the lot; "counterfeit" corresponds to the product not belonging to the lot.

(4) In the case of multiple lots of product, it is possible to identify to which lot of the plurality of lots the product of the laser label belongs, or to which lot of the plurality of lots the product of the laser label does not belong. In this case, "genuine" corresponds to the product belonging to one lot of the multiple lots; "counterfeit" corresponds to the product being not belonging to any of the multiple lots.

"The same lot products" or "products of the same lot", for example, refer to the products corresponding to labels printed on the same material by the same laser marking device.

For example, the product corresponding to the same lot of laser labels printed on material B by laser marking device A is set as lot I; the product corresponding to the same lot of laser labels printed on material C is set as lot II; the product corresponding to the same lot of laser labels printed on material A by another laser marking device D is set as lot III; the product corresponding to the same lot of laser labels printed on material C by another laser marking device D is set as lot IV.

In addition, in addition to defining the printing device and the printing materials, "the same lot of products" or "products of the same lot" may include other factors such as defining the printing period.

Identification schemes according to examples of the present disclosure can be applied in a variety of fields, including industry, consumer goods, retail, buildings, agriculture, and transportation. For example, an identification scheme according to the examples of the present disclosure may be used to: (1) Authenticate products, for example, by providing identification schemes to reduce the number of counterfeit products of counterfeit brands and minimize reputation losses; (2) identify whether products belong to the same lot of products; (3) transmit product information to the network during the process of authenticity identification and verification, so as to improve the transparency of distribution channels by providing tracking and tracing capabilities; (4) establish direct contact with customers during the process of authenticity verification, and thereby improving customer relationship management.

The specific implementations of the present disclosure are described with reference to the appended drawings.

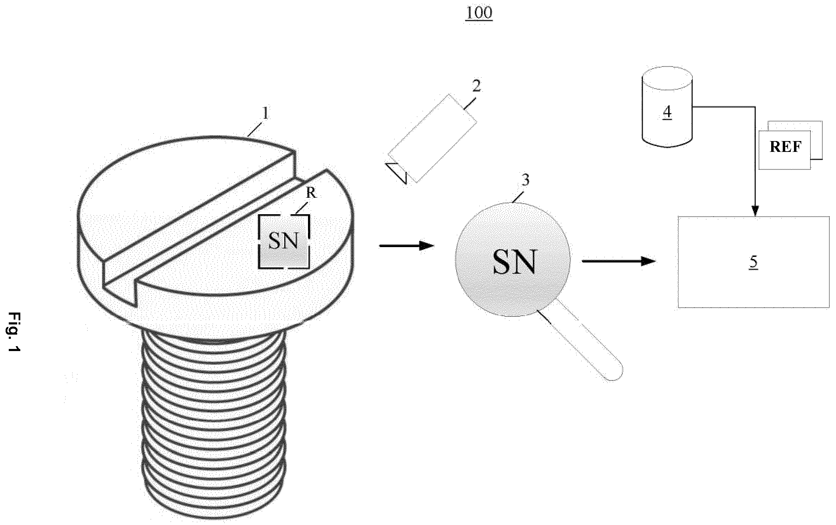

Fig. 1 shows an exemplary operating environment 100 according to some embodiments of the present disclosure. In the environment 100, the object 1 (the object 1 is a product to be identified and validated, e.g., a screw) has a laser label, such as the letter "SN". The reader 2 is disposed to align the laser label area R of the object 1, capture the texture features of the laser label area while reading the laser label, and generate the object image 3 containing the label area image of the label image. Standard images used as alignment criteria are stored in the database (library) 4 and include standard label images and standard label area images that include standard texture features of the standard label area. The laser label identification device (hereinafter referred to as "recognition device") 5 comprises an identification strategy, i.e., matching the object image with a standard image, e.g., aligning the object's label image with a standard label image; matching the texture features of the label area with the standard texture features after the label alignment passes; determining that the object image is in the true category when the matching passes; and determining that the object image is in the false category when the matching fails.

The identification device 5 may be implemented in hardware or software or in a combination of software and hardware. Parts implemented by hardware may be implemented in one or more application-specific integrated circuits (ASIC), digital signal processors (DSP), data signal processing devices (DSPD), programmable logic devices (PLD), field programmable gate arrays (FPGA), processors, controllers, microcontrollers, microprocessors, electronic units designed to perform functions thereof, or combinations thereof. Parts implemented by software may be implemented by using microcode, program code, or a code segment, or may be stored in a machine-readable storage medium such as a storage component.

In one embodiment of the present disclosure, the identification device 5 includes a memory and a processor. The memory comprises instructions that, when executed by the processor, cause the processor to perform an identification strategy/identification method according to an example of the present disclosure.

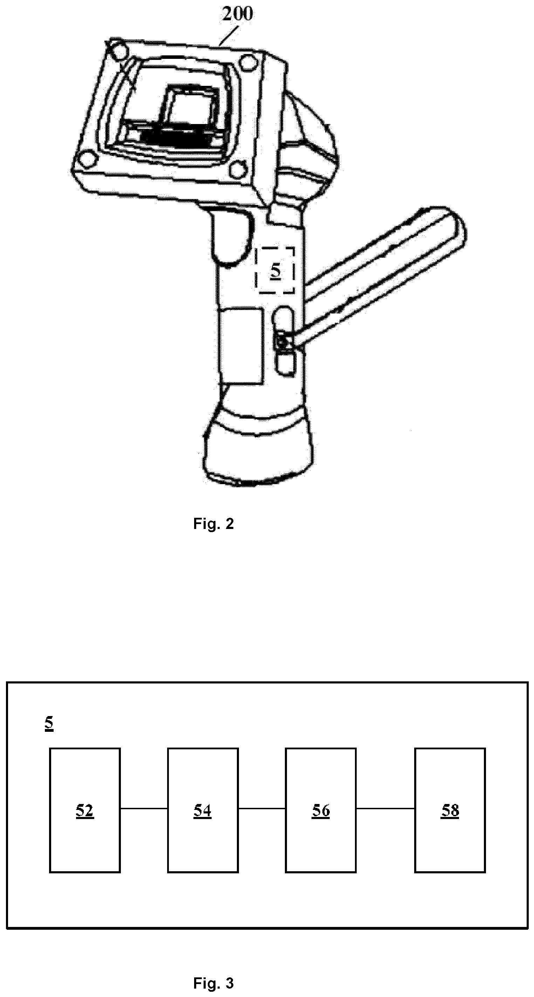

Fig. 2 shows a reader 200 disposed with an identification device 5 according to an example of the present disclosure. The identification device 5 may be implemented as an identification software disposed in the reader 200. The reader 200 may be a fixed reader, a handheld reader, or the like.

It should be understood that where the identification device 5 is implemented in software, the software being a reader or a product validation program, thereby optimizing the authenticity recognition function of the reader or product validation program.

Fig. 3 shows a schematic block diagram of an identification device 5 according to an embodiment of the present disclosure. As shown in Fig. 3, the identification device 5 primarily comprises a receiving module 52, a processing module 54, an identification module 56, and an output module 58.

It should be noted that the naming of the modules of the identification device 5 should be understood as a logical description, rather than as a limitation of the physical form or mode of setup. For example, one or more of the receiving module 52, the processing module 54, the identification module 56, and the output module 58 may be implemented in the same chip or circuit, and they may also be respectively disposed in different chips or circuits, which is not defined by the present disclosure. The modules of the identification device 5 may further be divided into a plurality of sub-modules, each sub-module being implemented as a sub-routine.

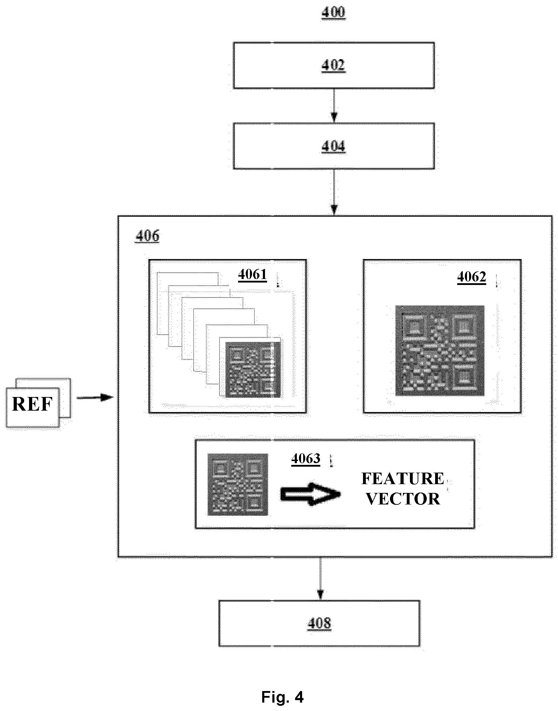

Fig. 4 shows an identification process 400 according to an embodiment of the present disclosure. This identification process 400 may be performed in the identification device 5 described above.

In block 402, the receiving module 52 receives an image of an object captured by the reader. The object image includes a laser label image and a label area image, the label area image being an image of a label area on the surface of the object. For example, an image of a surface area R where the laser label "SN" is located in Fig. 1.

In block 404, the processing module 54 processes the captured image of the object to obtain a texture feature of a designated area on the surface of the object (i.e., the area of the product label that is laser burned to form the laser label).

The texture feature includes a natural fingerprint feature of the label area on the surface of the object, the natural fingerprint feature being associated with at least one of the following.

(1) The material of the label area on the surface of the object.

(2) Process parameters in the laser marking process forming the laser label, e.g., one or more of focusing spot size, laser power, and beam quality.

(3) The type of laser marking device employed (e.g., optical fiber laser marking machine, end pump infrared/green light/ultraviolet laser marking machine, laser sculpting machine, $CO_2$ laser marking machine) and its performance parameters (e.g., output power, beam quality, pulse width, pulse repetition frequency).

(4) A combination of laser marking devices and print materials employed. Considering that printing is made on the same material by different printing devices, different texture features are produced; different texture features will occur when printing by the same printing device is made on different materials. Thus, combinations of printing devices and printing materials are an important factor affecting texture features.

In block 406, the identification module 56 matches the object image with the stored standard image (e.g., the identification module 56 acquires a corresponding standard image from the database 4 for identifying the object/product) to identify the authenticity of the object image. Standard images include laser-based standard label images and standard label area images including standard texture features of standard label areas as a matching criterion.

In this matching, the label image and the texture feature of the object may be matched to the standard label image and the standard texture feature, respectively. For example, a label image of an object is first matched to a standard label image, and after that matching passes, the texture feature of the label area of the object is then matched to the standard texture feature. It should be understood that a matching with respect to the label image and a matching with respect to the texture feature can also be performed simultaneously.

With respect to the matching method between the label image and the standard label image for the object, the identification module 56 may employ suitable image processing and matching schemes, which are not defined by the present disclosure.

With respect to the alignment between the texture features of the object and the standard texture features, the identification module 56 may be implemented by a method of extracting the multi-dimensional feature vector and calculating the vector difference (see block 4603).

In an example of the present disclosure, with the standard image as sample A and the object image as sample B as an example, the identification module 56 determines whether the object image is of a true or fake category by calculating the similarity between the multi-dimensional characteristic vector $Y_A$ abstracted from sample A and the multi-dimensional characteristic vector $Y_B$ abstracted from sample B (e.g., represented by a difference in the vector of both) as a predetermined threshold. In particular, the identification module 56 generates a multi-dimensional characteristic vector $Y_A$ (e.g., a standard characteristic vector) of the sample A based on a plurality of parameters characterizing the micro-texture feature of the sample A and the weights of the various parameters; generating a multi-dimensional characteristic vector $Y_B$ (e.g., an object characteristic vector) of the sample B based on the weight of the micro-texture feature of the sample B. Next, the distance between the standard characteristic vector $_{YA}$ and the object characteristic vector $Y_B$ is calculated, e.g., the Euclidean distance. The calculated distance is then determined to be greater than the distance threshold. The object image is determined to be of the fake category if the calculated distance is greater than the distance threshold; the object image is determined to be of the true category if the calculated distance is less than or equal to the distance threshold.

For example, based on the surface material of the label area of sample A, the process parameters during laser marking, and the model number of the laser marking device and its set parameters, the N-dimensional characteristic matrix XA, XA∈ RN of sample A is abstracted; a weight matrix WA, WA∈ RM,N+1 of the weight of consideration factors characterizing sample A is generated; and the N-dimensional characteristic matrix XA and weight matrix WA (multiplying with the two matrices XA and WA) of sample A are used to generate the multi-dimensional characteristic vector YA of the sample A (e.g., standard characteristic vector) Similarly, based on the surface material of the label area of sample B, the process parameters during laser marking, and the model of the laser marking device and its set parameters, the N-dimensional characteristic matrix XB, XB∈ RN of sample B is abstracted; a weight matrix WB, WB∈ RM,N+1 of consideration factors that characterize sample B is generated; and based on the N-dimensional feature matrix XB of sample B (multiplying with the two matrices XB and WB ), for example, the multi-dimensional characteristic vector YB (such as the object's characeristic vector) of the sample B is generated. The similarity between the standard characteristic vector $_{YA}$ and the object characteristic vector $_{YB}$ is then calculated, e.g., the Euclidean distance between them. The similarity between the standard characteristic vector $_{YA}$ and the object characteristic vector $_{YB}$ can be calculated by the following equation:

$$Similarity(A,B) = (\sum_{j=1}^{M} |Y_{Aj} - Y_{Bj}|^2)^{1/2}$$

When the similarity Similarity(A,B) between the standard characteristic vector $_{YA}$ and the object characteristic vector $_{YB}$ is less than a predetermined threshold, it is determined that sample B meets the criteria (i.e., the discrimination result is "true"), e.g., sample B is the authentic product or sample B is a product of the same lot as sample A.

The identification module 56 may accomplish the above-described matching (i.e., matching between the object image and the standard image) by way of an image processing model.

The image processing model may be implemented by virtue of artificial intelligence techniques, e.g., the model is implemented as a trained machine learning model. The model can improve the robustness of its identification capabilities by utilizing an appropriate neural network model.

In an example of the present disclosure, a large number of imitation images and standard images are taken as samples and the image processing model is trained to enable the model, upon receiving a new image input, to determine whether the new image belongs to a true category (i.e., the matching result is capable of matching the standard image) or a fake category (i.e., the matching result is unable to match the standard image). In this example, the image processing model may also be re-learned based on information during use in order to periodically obtain updated parameters, thereby increasing the intelligent capability and processing speed of the model.

The matching process under some scenarios is described below.

In a scenario, with reference to block 4061, the identification module 56 determines if the product corresponding to the object image is one of the same lot of products by matching. In this scenario, it is only necessary to determine if the object belongs to one of the same lot of products without identifying a specific laser label or product. In other words, under this scenario, as long as it is determined that the product corresponding to the object image belongs to one of the same lot of products, the identification result is true; in turn, the identification result is fake.

In this scenario, the identification module 56 may compare the object image with a standard image representing the products of the same lot to determine whether the object image is a true or fake piece of the object image and thereby determine whether the output corresponding to the image belongs to the same lot of products.

For example, multiple standard images of multiple products of the same lot (each standard image comprising a standard label image and a standard label area image) and multiple imitation images (each imitation image comprising a prevented laser label image and a label area image) are used to train the image processing model so that when the new image is entered, the product corresponding to the new image can be determined to belong to this lot and a determination result is outputted.

It should be understood that even images of the same lot of products may have minor differences, but not be identical. Training of a large number of samples of the same lot enables the model to identify whether the product corresponding to the new image inputted belongs to the same lot.

In another case, the identification device may identify which of the lots, or any of the lots, the product corresponding to the image of the object belongs to.

For example, the identification module 56 matches the object image to a standard image representing each lot of product for a plurality of lots of products; determines that the product corresponding to the object image belongs to this lot if the object image matches the standard image representing the product of the lot; determines that the product corresponding to the object image does not belong to any of the plurality of lots of product if the object image fails in the matching with the standard image representing any lot of product.

In examples regarding "lots", there is no need to compare object images to multiple images corresponding to the products of the same lot separately, which can save huge computing power and improve identification efficiency. In another scenario, with reference to block 4062, the identification module 56 determines the authenticity of the product corresponding to the object image by matching.

In this scenario, the identification module 56 matches the object image with a standard image representing a single authentic product to determine whether the object image belongs to the true category or the fake category to determine the authenticity of the product corresponding to the object image. For some possible embodiments of product authenticity, refer to the relevant description above, which are not repeated here.

For example, the image processing model is trained using standard images and object images of a large number of counterfeit or non-compliant products to enable the model to determine the authenticity of the product corresponding to the new image when the new image is inputted.

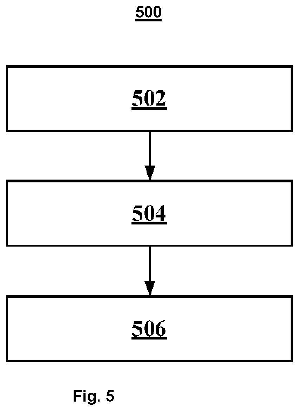

Fig. 5 shows a flow chart of an identification method 500 according to the embodiments of the present disclosure. The identification method 500 may be performed by the identification device 5 described above. Therefore, the above description is equally applicable here.

In Step S502, an object image is received that comprises a laser label image and a label area image of a label area on the surface of the object.

In Step S504, the object image is processed to obtain a texture feature of a label area on the surface of the object. The texture feature is related to the material of the laser label area, the laser marking device employed, and the marking process.

In Step S506, the object image is matched to a stored standard image to differentiate from the authenticity of the object image, the standard image comprising a standard laser label image as a matching criterion and a standard label area image including a standard texture feature for a label area, wherein the matching comprises matching the label image and texture feature of the object to the standard label image and the standard texture feature, respectively.

The present disclosure also provides machine-readable storage media having executable instructions stored that, when executed, cause the machine to perform an identification method or identification process as described above.

It should be understood that all of the operations described above in the methods or processes are exemplary and that the present disclosure is not limited to any of the operations or the order of these operations in the methods or processes, but rather should encompass all other equivalents under the same or similar ideas.

It should be understood that the identification device described above may be implemented in a variety of ways. For example, it may be implemented as hardware, software, or combinations thereof.

The identification device may include one or more processors. These processors may be implemented using electronic hardware, computer software, or any combination thereof. Whether these processors are implemented as hardware or software will depend on the particular application and the overall design constraints applied to the system. By way of example, any of the processors, any portion of the processors, or any combination of processors given herein, may be implemented as microprocessors, microcontrollers, digital signal processors (DSPs), field programmable gate arrays (FPGAs), programmable logic devices (PLDs), state machines, gate logic, discrete hardware circuits, and other appropriate processing components configured to perform the various functions described herein. The functions of the processor, any portion of the processor, or any combination of processors given herein may be implemented as software executed by a microprocessor, microcontroller, DSP, or other appropriate platform.

The software may be broadly considered to represent instructions, instruction sets, codes, code segments, program codes, programs, sub-programs, software modules, applications, software applications, software packages, routines, sub-routines, objects, running threads, processes, functions, etc. The software may reside in a computer-readable medium. The computer-readable medium may comprise, for example, a memory, which may be, for example, a magnetic memory device (e.g., hard disks, floppy disks, magnetic strips), optical disks, smart cards, flash memory devices, random access memory (RAM), read-only memory (ROM), programmable ROM (PROM), erasable PROM (EPROM), electrically erasable PROM (EEPROM), registers, or removable disks. Although the memory is shown as being separate from the processor in the various aspects given herein, the memory may also be located inside the processor (e.g., a cache or register).

**Claims**

**1.** A laser label identification device (5), comprising:

a receiving module (52) configured to receive an object image comprising a laser label image and a label area image of a laser label area (R) on a surface of an object (1);

a processing module (54) configured to process the object image (3) to obtain a texture feature of the laser label area (R) that is laser burned to form a laser label, wherein the texture feature comprises a natural fingerprint feature of the laser label area and is associated with a material of the laser label area (R), a laser marking apparatus employed, and a laser marking process; and

an identification module (56) configured to match the object image (3) to a stored standard image to identify the authenticity of the object image (3), the standard image comprising a standard laser label image as a matching criterion and a standard label area image comprising a standard texture feature of a label area, wherein the matching comprises matching the laser label image and the texture feature of the object (1) with the standard laser label image and the standard texture feature, respectively, wherein the factors affecting the texture features include at least one of the following:

- process parameters during the laser marking process;
- the type of laser marking device employed and its performance parameters; and
- a combination of a laser marking device and a material of the laser label area employed.

2. The laser label identification device (5) according to Claim 1, wherein the laser label identification device (5) further comprises an output module (58) configured to output an identification result so as to determine the authenticity of the product corresponding to the image of the object (1).

3. The laser label identification device (5) according to Claim 2, wherein the authenticity of the product comprises:

(1) The product corresponding to the image of the object (1) is a genuine product or a counterfeit;

(2) Whether the product corresponding to the object image (3) meets the customization requirements, optionally, the customization requirements include one or more of the pre-specified place of manufacture, production institution and distribution channel;

(3) Whether the product corresponding to the object image (3) belongs to the products of the same lot;

(4) The product corresponding to the object image (3) belongs to one lot of the multiple lots of products or does not belong to any lot of the multiple lots of products.

4. The laser label identification device (5) according to any of Claims 1-3, wherein identifying the authenticity of the object image (3) comprises:

matching the object image (3) to a standard image representing the products of the same lot;

in the event of a successful matching, the product determined to correspond to the object image (3) belongs to this lot; and

In the event of a matching failure, the product determined to correspond to the object image does not belong to this lot.

5. The laser label identification device (5) according to any of Claims 1-3, wherein identifying the authenticity of the object image (3) comprises:

matching the object image (3) to a standard image representing various lots of a product among a plurality of lots of products;

if the object image (3) matches successfully with a standard image representing the products of the same lot, the product determined to correspond to the object image (3) belongs to this lot;

In the event that the object image (3) matches a standard image representing any of the lots of products, the product determined to correspond to the object image (3) does not belong to any one of the plurality of lots of products.

6. The laser label identification device (5) according to any of Claims 1-5, wherein identifying the authenticity of the object image (3) comprises:

matching the object image (3) to a standard image of a true type of product;

determining that the product corresponding to the object image (3) is true in the event of successful matching;

and

in the event of a matching failure, determining that the product corresponding to the object image (3) is a counterfeit.

7. The laser label identification device (5) according to any of Claims 1-6, wherein the matching comprises:

generating a multi-dimensional object characteristic vector based on the various parameters of the texture feature of the object image (3) and the weights thereof;

generating a multi-dimensional standard characteristic vector based on various parameters of a standard texture feature of the standard image and the weights thereof;

calculating a distance between an object characteristic vector and a standard characteristic vector, the distance being optionally an Euclidean distance; and

determining the authenticity of the object image (3) based on whether the distance meets a distance threshold.

8. The laser label identification device (5) according to any of Claims 1-7, wherein the identification module implements the identification by means of an image recognition model, the object image (3) being inputted as a model, and model processing obtains a model output representative of the authenticity of the object image (3),

Optionally, the image processing model is a machine learning model,

Further optionally, the machine learning model performs relearning based on information obtained by the identification device during use.

9. The laser label identification device (5) according to any of Claims 1-8, wherein the identification device is disposed in a reader for capturing the object image (3); or

The identification device is disposed in an authentication device for authenticating the authenticity of a product corresponding to the object image (3).

10. A laser label identification method optionally performed by the identification device (5) according to any one of Claims 1-9, the method comprising:

receiving (S502) an object image (3) including a laser label image and a label area image of a laser label area (R) on a surface on an object (1);

processing (S504) the object image to obtain a texture feature of the laser label area (R) that is laser burned to form a laser label, wherein the texture feature comprises a natural fingerprint feature of the laser label area and is associated with a material of the laser label area (R), a laser marking device employed, and a laser marking process; and

matching (S506) the object image (3) with a stored standard image to identify the authenticity of the object image (3), the standard image comprising a standard laser label image as a matching criterion and a standard label area image including a standard texture feature of a label area,

wherein the matching comprises matching the laser label image and the texture feature of the object (1) to a standard laser label image and a standard texture feature, respectively.

11. A machine-readable storage medium having stored executable instructions that, when executed, cause one or more processors to perform the method of Claim 10.

**Patentansprüche**

1. Laserkennzeichnungs-Identifizierungsvorrichtung (5), die Folgendes umfasst:

ein Empfangsmodul (52), das konfiguriert ist, ein Gegenstandsbild zu empfangen, das ein Laserkennzeichnungsbild und ein Kennzeichnungsbereichsbild eines Laserkennzeichnungsbereichs (R) auf einer Oberfläche eines Gegenstands (1) umfasst;

ein Verarbeitungsmodul (54), das konfiguriert ist, das Gegenstandsbild (3) zu verarbeiten, um ein Strukturmerkmal des Laserkennzeichnungsbereichs (R) zu erhalten, der auf eine Weise mittels Laser bearbeitet ist, dass eine Laserkennzeichnung gebildet ist, wobei das Strukturmerkmal ein natürliches Fingerabdruckmerkmal des Laserkennzeichnungsbereichs umfasst und einem Material des Laserkennzeichnungsbereichs (R), einer eingesetzten Lasermarkierungseinrichtung und einem Lasermarkierungsprozess zugeordnet ist; und

ein Identifizierungsmodul (56), das konfiguriert ist, das Gegenstandsbild (3) mit einem gespeicherten Normbild abzugleichen, um die Authentizität des Gegenstandsbilds (3) zu identifizieren, wobei das Normbild ein Normlaserkennzeichnungsbild als ein Abgleichkriterium und ein Normkennzeichnungsbereichsbild, das ein Normstrukturmerkmal eines Kennzeichnungsbereichs umfasst, umfasst,

wobei das Abgleichen das Abgleichen des Laserkennzeichnungsbilds und des Strukturmerkmals des Gegenstands (1) mit dem Normlaserkennzeichnungsbild bzw. dem Normstrukturmerkmal umfasst, wobei die Faktoren, die die Strukturmerkmale beeinflussen, Folgendes enthalten:

- Prozessparameter während des Lasermarkierungsprozesses; und/oder
- den Typ der eingesetzten Lasermarkierungsvorrichtung und ihre Leistungsparameter; und
- eine Kombination einer Lasermarkierungsvorrichtung und eines eingesetzten Materials des Laserkennzeichnungsbereichs.

2. Laserkennzeichnungs-Identifizierungsvorrichtung (5) nach Anspruch 1, wobei die Laserkennzeichnungs-Identifizierungsvorrichtung (5) ferner ein Ausgangsmodul (58) umfasst, das konfiguriert ist, ein Identifizierungsergebnis auszugeben, um die Authentizität des Erzeugnisses, das dem Bild des Gegenstands (1) entspricht, zu bestimmen.

3.  Laserkennzeichnungs-Identifizierungsvorrichtung (5) nach Anspruch 2, wobei die Authentizität des Erzeugnisses Folgendes umfasst:

    (1) das Erzeugnis, das dem Bild des Gegenstands (1) entspricht, ist ein Originalerzeugnis oder eine Fälschung;
    (2) ob das Erzeugnis, das dem Gegenstandsbild (3) entspricht, die kundenspezifischen Anforderungen erfüllt, wahlweise wobei die kundenspezifischen Anforderungen den vorgegebenen Fertigungsort und/oder die vorgegebene Herstellungsorganisation und/oder den vorgegebenen Vertriebskanal enthalten;
    (3) ob das Erzeugnis, das dem Gegenstandsbild (3) entspricht, zu den Erzeugnissen derselben Charge gehört;
    (4) das Erzeugnis, das dem Gegenstandsbild (3) entspricht, gehört zu einer Charge der mehreren Chargen von Erzeugnissen oder gehört zu keiner Charge der mehreren Chargen von Erzeugnissen.

4.  Laserkennzeichnungs-Identifizierungsvorrichtung (5) nach einem der Ansprüche 1-3, wobei das Identifizieren der Authentizität des Gegenstandsbilds (3) Folgendes umfasst:

    Abgleichen des Gegenstandsbilds (3) mit einem Normbild, das die Erzeugnisse derselben Charge darstellt;
    wobei im Fall eines erfolgreichen Abgleichs, das Erzeugnis, für das bestimmt wird, dass es dem Gegenstandsbild (3) entspricht, zu dieser Charge gehört; und
    wobei im Fall eines fehlgeschlagenen Abgleichs das Erzeugnis, für das bestimmt wird, dass es dem Gegenstandsbild entspricht, nicht zu dieser Charge gehört.

5.  Laserkennzeichnungs-Identifizierungsvorrichtung (5) nach einem der Ansprüche 1-3, wobei das Identifizieren der Authentizität des Gegenstandsbilds (3) Folgendes umfasst:

    Abgleichen des Gegenstandsbilds (3) mit einem Normbild, das diverse Chargen eines Erzeugnisses von mehreren Chargen von Erzeugnissen darstellt;
    dann, wenn das Gegenstandsbild (3) erfolgreich mit einem Normbild übereinstimmt, das die Erzeugnisse derselben Charge darstellt, das Erzeugnis, für das bestimmt wird, dass es dem Gegenstandsbild (3) entspricht, zu dieser Charge gehört;
    dann, wenn das Gegenstandsbild (3) mit einem Normbild übereinstimmt, das irgendeine der Chargen von Erzeugnissen darstellt, das Erzeugnis, für das bestimmt wird, dass es dem Gegenstandsbild (3) entspricht, zu keiner der mehreren Chargen von Erzeugnissen gehört.

6.  Laserkennzeichnungs-Identifizierungsvorrichtung (5) nach einem der Ansprüche 1-5, wobei das Identifizieren der Authentizität des Gegenstandsbilds (3) Folgendes umfasst:

    Abgleichen des Gegenstandsbilds (3) mit einem Normbild eines echten Typs des Erzeugnisses;
    Bestimmen, dass das Erzeugnis, das dem Gegenstandsbild (3) entspricht, echt ist, im Fall eines erfolgreichen Abgleichs;
    und
    im Fall eines fehlgeschlagenen Abgleichs Bestimmen, dass das Erzeugnis, das dem Gegenstandsbild (3) entspricht, eine Fälschung ist.

7.  Laserkennzeichnungs-Identifizierungsvorrichtung (5) nach einem der Ansprüche 1-6, wobei das Abgleichen Folgendes umfasst:

    Erzeugen eines mehrdimensionalen Gegenstands-Eigenschaftsvektors auf der Grundlage der diversen Parameter des Strukturmerkmals des Gegenstandsbilds (3) und von deren Gewichtungen;
    Erzeugen eines mehrdimensionalen Normeigenschaftsvektors auf der Grundlage diverser Parameter eines Normstrukturmerkmals des Normbilds und von deren Gewichtungen;
    Berechnen eines Abstands zwischen einem Gegenstands-Eigenschaftsvektor und einem Normeigenschaftsvektor, wobei der Abstand wahlweise ein Euklidischer Abstand ist; und
    Bestimmen der Authentizität des Gegenstandsbilds (3) auf der Grundlage davon, ob der Abstand einen Abstandsschwellenwert erfüllt.

8.  Laserkennzeichnungs-Identifizierungsvorrichtung (5) nach einem der Ansprüche 1-7, wobei das Identifizierungsmodul die Identifizierung mittels eines Bilderkennungsmodells implementiert, wobei das Gegenstandsbild (3) als ein Modell eingegeben wird und eine Modellverarbeitung einen Modellausgang ermittelt, der die Authentizität des Gegenstandsbilds (3) darstellt,

    wahlweise wobei das Bildverarbeitungsmodell ein Modell zum maschinellen Lernen ist, nochmals wahlweise wobei das Modell zum maschinellen Lernen ein erneutes Lernen auf der Grundlage von Informationen, die im Gebrauch durch die Identifizierungsvorrichtung erhalten werden, durchführt.

9. Laserkennzeichnungs-Identifizierungsvorrichtung (5) nach einem der Ansprüche 1-8, wobei die Identifizierungsvorrichtung in einer Leseeinrichtung zum Aufnehmen des Gegenstandsbilds (3) angeordnet ist; oder die Identifizierungsvorrichtung in einer Authentifizierungsvorrichtung zum Authentifizieren der Authentizität eines Erzeugnisses, das dem Gegenstandsbild (3) entspricht, angeordnet ist.

10. Laserkennzeichnungs-Identifizierungsverfahren, das wahlweise durch die Identifizierungsvorrichtung (5) nach einem der Ansprüche 1-9 durchgeführt wird, wobei das Verfahren Folgendes umfasst:

Empfangen (S502) eine Gegenstandsbilds (3), das ein Laserkennzeichnungsbild und ein Kennzeichnungsbereichsbild eines Laserkennzeichnungsbereichs (R) auf einer Oberfläche eines Gegenstands (1) enthält;
Verarbeiten (S504) des Gegenstandsbilds, um ein Strukturmerkmal des Laserkennzeichnungsbereichs (R) zu erhalten, der auf eine Weise mittels Laser bearbeitet ist, dass eine Laserkennzeichnung gebildet ist, wobei das Strukturmerkmal ein natürliches Fingerabdruckmerkmal des Laserkennzeichnungsbereichs umfasst und einem Material des Laserkennzeichnungsbereichs (R), einer eingesetzten Lasermarkierungsvorrichtung und einem Lasermarkierungsprozess zugeordnet ist; und
Abgleichen (S506) des Gegenstandsbilds (3) mit einem gespeicherten Normbild, um die Authentizität des Gegenstandsbilds (3) zu identifizieren, wobei das Normbild ein Normlaserkennzeichnungsbild als ein Abgleichkriterium und ein Normkennzeichnungsbereichsbild, das ein Normstrukturmerkmal eines Kennzeichnungsbereichs enthält, umfasst,
wobei das Abgleichen das Abgleichen des Laserkennzeichnungsbilds und des Strukturmerkmals des Gegenstands (1) mit einem Normlaserkennzeichnungsbild bzw. einem Normstrukturmerkmal umfasst.

11. Maschinenlesbares Speichermedium, das gespeicherte ausführbare Anweisungen aufweist, die dann, wenn sie ausgeführt werden, bewirken, dass einer oder mehrere Prozessoren das Verfahren nach Anspruch 10 durchführen.

## Revendications

1. Dispositif d'identification d'étiquette laser (5), comprenant :

un module de réception (52) configuré pour recevoir une image d'objet comprenant une image d'étiquette laser et une image de zone d'étiquette d'une zone d'étiquette laser (R) sur une surface d'un objet (1) ;
un module de traitement (54) configuré pour traiter l'image d'objet (3) afin d'obtenir un attribut de texture de la zone d'étiquette laser (R) qui est brûlée au laser pour former une étiquette laser, dans lequel l'attribut de texture comprend un attribut d'empreinte digitale naturelle de la zone d'étiquette laser et est associé à un matériau de la zone d'étiquette laser (R), un appareil de marquage au laser employé, et un processus de marquage au laser ; et
un module d'identification (56) configuré pour apparier l'image d'objet (3) à une image standard stockée afin d'identifier l'authenticité de l'image d'objet (3), l'image standard comprenant une image d'étiquette laser standard en tant que critère d'appariement et une image de zone d'étiquette standard comprenant un attribut de texture standard d'une zone d'étiquette, dans lequel l'appariement comprend l'appariement de l'image d'étiquette laser et de l'attribut de texture de l'objet (1) avec l'image d'étiquette laser standard et l'attribut de texture standard, respectivement,
dans lequel les facteurs influant sur les attributs de texture incluent au moins l'un des éléments suivants :

- paramètres de processus pendant le processus de marquage au laser ;
- le type de dispositif de marquage au laser employé et ses paramètres de performance ; et
- une combinaison d'un dispositif de marquage au laser et d'un matériau de la zone d'étiquette laser employés.

2. Dispositif d'identification d'étiquette laser (5) selon la revendication 1, le dispositif d'identification d'étiquette laser (5) comprenant en outre un module de sortie (58) configuré pour fournir en sortie un résultat d'identification de façon à déterminer l'authenticité du produit correspondant à l'image de l'objet (1).

3. Dispositif d'identification d'étiquette laser (5) selon la revendication 2, dans lequel l'authenticité du produit comprend :

(1) le produit correspondant à l'image de l'objet (1) est un produit garanti d'origine ou une contrefaçon ;

(2) si le produit correspondant à l'image d'objet (3) satisfait ou non aux conditions de personnalisation, facultativement, les conditions de personnalisation incluent un ou plusieurs éléments parmi le lieu de fabrication spécifié à l'avance, l'institution de production et le canal de distribution ;

(3) si le produit correspondant à l'image d'objet (3) appartient ou non aux produits du même lot ;

(4) le produit correspondant à l'image d'objet (3) appartient à un lot des multiples lots de produits ou n'appartient à aucun lot des multiples lots de produits.

4. Dispositif d'identification d'étiquette laser (5) selon l'une quelconque des revendications 1 à 3, dans lequel l'identification de l'authenticité de l'image d'objet (3) comprend :

l'appariement de l'image d'objet (3) à une image standard représentant les produits du même lot ;

en cas d'appariement réussi, le produit déterminé comme correspondant à l'image d'objet (3) appartient à ce lot ; et

en cas d'échec de l'appariement, le produit déterminé comme correspondant à l'image d'objet n'appartient pas à ce lot.

5. Dispositif d'identification d'étiquette laser (5) selon l'une quelconque des revendications 1 à 3, dans lequel l'identification de l'authenticité de l'image d'objet (3) comprend :

l'appariement de l'image d'objet (3) à une image standard représentant divers lots d'un produit parmi une pluralité de lots de produits ;

si l'appariement de l'image d'objet (3) avec une image standard représentant les produits du même lot est réussi, le produit déterminé comme correspondant à l'image d'objet (3) appartient à ce lot ;

dans le cas où l'image d'objet (3) est appariée à une image standard représentant l'un quelconque des lots de produits, le produit déterminé comme correspondant à l'image d'objet (3) n'appartient pas à l'un quelconque de la pluralité de lots de produits.

6. Dispositif d'identification d'étiquette laser (5) selon l'une quelconque des revendications 1 à 5, dans lequel l'identification de l'authenticité de l'image d'objet (3) comprend :

l'appariement de l'image d'objet (3) à une image standard d'un type vrai de produit ;

la détermination que le produit correspondant à l'image d'objet (3) est vrai en cas d'appariement réussi ;

et

en cas d'échec de l'appariement, la détermination que le produit correspondant à l'image d'objet (3) est une contrefaçon.

7. Dispositif d'identification d'étiquette laser (5) selon l'une quelconque des revendications 1 à 6, dans lequel l'appariement comprend :

la génération d'un vecteur caractéristique d'objet multidimensionnel sur la base des divers paramètres de l'attribut de texture de l'image d'objet (3) et de leurs poids ;

la génération d'un vecteur caractéristique standard multidimensionnel sur la base de divers paramètres d'un attribut de texture standard de l'image standard et de leurs poids ;

le calcul d'une distance entre un vecteur caractéristique d'objet et un vecteur caractéristique standard, la distance étant facultativement une distance euclidienne ; et

la détermination de l'authenticité de l'image d'objet (3) sur la base de si la distance satisfait ou non à un seuil de distance.

8. Dispositif d'identification d'étiquette laser (5) selon l'une quelconque des revendications 1 à 7, dans lequel le module d'identification met en œuvre l'identification au moyen d'un modèle de reconnaissance d'image, l'image d'objet (3) étant entrée en tant que modèle, et un traitement de modèle obtient une sortie de modèle représentative de l'authenticité de l'image d'objet (3), facultativement, le modèle de traitement d'image est un modèle d'apprentissage automatique,

facultativement en outre, le modèle d'apprentissage automatique réalise un réapprentissage sur la base d'informations obtenues par le dispositif d'identification pendant l'utilisation.

9. Dispositif d'identification d'étiquette laser (5) selon l'une quelconque des revendications 1 à 8, dans lequel le dispositif d'identification est disposé dans un lecteur pour capturer l'image d'objet (3) ; ou

le dispositif d'identification est disposé dans un dispositif d'authentification pour authentifier l'authenticité d'un produit correspondant à l'image d'objet (3).

10. Procédé d'identification d'étiquette laser facultativement réalisé par le dispositif d'identification (5) selon l'une quelconque des revendications 1 à 9, le procédé comprenant :

la réception (S502) d'une image d'objet (3) incluant une image d'étiquette laser et une image de zone d'étiquette d'une zone d'étiquette laser (R) sur une surface d'un objet (1) ;

le traitement (S504) de l'image d'objet pour obtenir un attribut de texture de la zone d'étiquette laser (R) qui est brûlée au laser pour former une étiquette laser, dans lequel l'attribut de texture comprend un attribut d'empreinte digitale naturelle de la zone d'étiquette laser et est associé à un matériau de la zone d'étiquette laser (R), un dispositif de marquage au laser employé, et un processus de marquage au laser ; et

l'appariement (S506) de l'image d'objet (3) avec une image standard stockée pour identifier l'authenticité de l'image d'objet (3), l'image standard comprenant une image d'étiquette laser standard en tant que critère d'appariement et une image de zone d'étiquette standard incluant une caractéristique de texture standard d'une zone d'étiquette,

dans lequel l'appariement comprend l'appariement de l'image d'étiquette laser et de l'attribut de texture de l'objet (1) à une image d'étiquette laser standard et un attribut de texture standard, respectivement.

11. Support de stockage lisible par machine ayant des instructions exécutables stockées qui, lorsqu'elles sont exécutées, amènent un ou plusieurs processeurs à réaliser le procédé selon la revendication 10.

Fig. 1

**Fig. 2**

**Fig. 3**

Fig. 4

<u>500</u>

```
┌─────────────────────────┐
│          502            │
└─────────────────────────┘
            │
            ▼
┌─────────────────────────┐
│          504            │
└─────────────────────────┘
            │
            ▼
┌─────────────────────────┐
│          506            │
└─────────────────────────┘
```

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110544424 A